(19) Europäisches Patentamt
European Patent Office
Office européen des brevets

(11) Veröffentlichungsnummer: **0 087 038**
**B1**

(12) # EUROPÄISCHE PATENTSCHRIFT

(45) Veröffentlichungstag der Patentschrift: **02.07.86**

(51) Int. Cl.⁴: **C 08 G 75/02**, C 08 L 81/02, C 08 L 69/00, C 08 L 67/02

(21) Anmeldenummer: **83101111.9**

(22) Anmeldetag: **07.02.83**

(54) **Verwendung von farbhellen Polyphenylensulfiden in Mischungen mit thermoplastischen Polycarbonaten und/oder thermoplastischen Polyestern.**

(30) Priorität: **19.02.82 DE 3205992**

(43) Veröffentlichungstag der Anmeldung: **31.08.83 Patentblatt 83/35**

(45) Bekanntmachung des Hinweises auf die Patenterteilung: **02.07.86 Patentblatt 86/27**

(84) Benannte Vertragsstaaten: **BE DE FR GB IT**

(56) Entgegenhaltungen:
**DE-A-2 503 336**
**DE-B-2 131 996**
**US-A-3 457 242**
**US-A-3 839 301**
**US-A-4 021 596**
**US-A-4 140 671**
**US-A-4 178 433**

(73) Patentinhaber: **BAYER AG, Konzernverwaltung RP Patentabteilung, D-5090 Leverkusen 1 Bayerwerk (DE)**

(72) Erfinder: **Idel, Karsten, Dr., Scheiblerstrasse 81, D-4150 Krefeld (DE)**
Erfinder: **Freitag, Dieter, Dr., Hasenheide 10, D-4150 Krefeld (DE)**
Erfinder: **Merten, Josef, Dr., Krünsend 30, D-4052 Korschenbroich (DE)**

**EP 0 087 038 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der vorliegenden Erfindung ist die Varwendung von farbhellen, gegebenenfalls gehärteten p-Polyphenylensulfiden, die nach bekannten Verfahren hergestellt und einer Nachbehandlung mit nichtoxydierenden organischen oder nicht oxydierenden anorganischen Säuren unterzogen worden sind, zur Herstellung von Mischungen mit thermoplastischen Polyestern und/oder thermoplastischen Polyestercarbonaten.

Die Nachbehandlung erfolgt vorzugsweise in Form einer Wäsche oder Extraktion im Anschluß an die Herstellung des gegebenenfalls gehärteten p-Polyphenylensulfids oder als Stabilisatorzusatz vor oder während der thermoplastischen Verarbeitung des hergestellten und gegebenenfalls gehärteten Polyphenylensulfids.

Ein weiterer Gegenstand der Erfindung sind Mischungen aus den nachbehandelten p-Polyphenylensulfiden mit thermoplastischen aromatischen Polycarbonaten, thermoplastischen Polyestern und/oder aromatischen thermoplastischen Polyester-Polycarbonaten.

Die jeweiligen Mengenverhältnisse von p-Polyphenylensulfid zu der Summe der anderen Thermoplasten liegen zwischen 98:2 und 30:70, vorzugsweise zwischen 98:2 und 50:50 und insbesondere zwischen 98:2 und 70:30 Polyphenylensulfid:Summe anderer Thermoplasten.

Ein weiterer Gegenstand der Erfindung ist die Verwendung dieser Mischungen zur Herstellung von beliebigen Formkörpern, einschließlich Folien und Fasern.

p-Polyphenylensulfid und seine Herstellung und Verwendung sind bekannt. (Siehe beispielsweise US-Patent 25 38 941, US-Patent 25 13 188, US-Patent 33 54 129, DE-AS 24 53 749, DE-OS 26 23 363, U8-Patent 40 38 261, US-Patent 40 38 259, U8-Patent 40 38 263, DE-OS 16 23 362, US-Patent 40 38 262, DE-08 26 23 333, US-Patent 40 46 114, US-Patent 40 38 260, US-Patent 40 39 518, DE-OS 28 17 731, U8-Patent 41 16 947, sowie die deutschen Offenlegungsschriften 29 30 710 und 29 30 79.)

Die Nachbehandlung von p-Polyphenylen sulfiden mit Säuren ist bekannt. (DE-B-2 131 996, US-A-3 839 301, US-A-3 457 242, US-A-4 178 433)

Mischungen von p-Polyphenylensulfiden mit thermoplastischen Polycarbonaten bzw. thermoplastischen Polyestern und gegebenenfalls weiteren Zusätzen sind ebenfalls bekannt. (Siehe beispielsweise DE-08 25 03 336 (Le A 16 232), japanische Patentanmeldung 133 612/74 (Mitsubishi Petro. Chem. Industries), US-Patent 40 21 596, japanische Patentanmeldungen 101 873/75 (Unitika KK), 132 827/76 (8umitomo Chemical), 3103/77 (Unitika Ltd.) und 140342/76 sowie US-Patent 4 140 671). In allen Fällen werden aber nicht mit Säuren nachbehandelte p-Polyphenylensulfide eingesetzt.

Bei vielen Herstellungsverfahren für p-Phenylensulfide muß sich ein Härtungs- oder Curingschritt anschließen, um via Kettenverlängerung und Verzweigung das Eigenschaftsbild der p-Polyphenylensulfide zu verbessern, insbesondere um deren thermoplastische Verarbeitung zu ermöglichen (Siehe z.B. US-Patent 37 17 620, US-Patent 35 24 835 und ÜS-Patent 38 39 301).

Die nach den Verfahren des Standes der Technik hergestellten Polyphenylensulfide haben im allgemeinen eine grau-weiße Farbe, die thermisch gehärteten haben eine braun-gelbe Farbe, die bislang erhältlichen p-Polyphenylensulfide haben nach ihrer thermoplastischen Verarbeitung eine braun-schwarze Farbe, die beispielsweise die Einstellung von definierten Farbtönen durch Einfärbung sehr erschwert bzw. gar unmöglich macht.

Darüber hinaus bewirken die bislang erhältlichen p-Polyphenylensulfide in Mischungen mit thermoplastischen Polycarbonaten oder thermoplastischen Polyestern einen gewissen Abbau der Mischungspartner, der sich auf das Eigenschaftsniveau der Mischungen ungünstig auswirkt.

Demgegenüber sind die erfindungsgemäß verwendeten p-Polyphenylensulfide nicht nur farbheller, sondern haben auch eine verringerte Abbauaktivität gegenüber den vorstehend genannten thermoplastischen Polycarbonaten bzw. Polyestern. Die erfindungsgemäß verwendeten Polyphenylensulfide sind nach der thermoplastischen Verarbeitung bei rascher Abkühlung und somit geringer Kristallisationsneigung transparent und bei langsamer Abkühlung und demzufolge höherer Kristallisationsneigung opake, grau-weiß. Die Einstellung definierter Farbtöne ist somit mit den erfindungsgemäß verwendeten Polyphenylensulfiden erleichtert. Im Falle der Mischungen haben beispielsweise die erfindungsgemäß verwendeten p-Phenylensulfide mit thermoplastischen aromatischen Polyestern eine verbesserte Schlagzähigkeit verglichen mit entsprechenden Mischungen aus den bislang erhältlichen p-Phenylensulfiden. Formmassen aus Glasfasern und den erfindungsgemäß verwendeten p-Polyphenylensulfiden zeigen ebenfalls bessere mechanische Eigenschaften als entsprechende Formmassen aus den bislang verwendeten p-Polyphenylensulfiden.

Aus U8-Patent 42 11 687 bzw. DE-08 28 33 024 ist bekannt, daß der Zusatz von p-Polyphenylensulfid zu aromatischen Polyestern deren geringe hydrolytische Stabilität gegenüber kochendem Wasser verbessert (siehe insbesondere die Beispiele 2 bis 6). Die Tatsache, daß p-Polyphenylensulfide als Zusätze zu Polyestern und Polycarbonaten bei deren thermoplatischen Verarbeitung einen Abbau der Polyester bzw. Polycarbonate bewirken, ist in diesen Lit.-Stellen nicht angesprochen und wird durch diese auch nicht nahegelegt. Somit lag es auch nicht nahe, daß die Nachbehandlung der Polyphenylensulfide diese als Legierungspartner für thermoplastische Polycarbonate und für thermoplastische Polyester geeigneter macht.

Die Nachbehandlung in Form der Wäsche oder Extraktion kann direkt im Anschluß an die Herstellung des p-Polyphenylensulfids erfolgen, und zwar gegebenenfalls vor oder nach deren Härtung. Die Nachbehandlung mit Säuren in Form eines Stabilisatorzusatzes erfolgt vor oder während der thermoplastischen Verarbeitung der gegebenenfalls gehärteten Polyphenylensulfide. Es können auch beide Maßnahmen kombiniert werden, so daß

nach der ersten Säurebehandlung via Wäsche oder Extraktion noch weitere Säure vor oder während der thermoplastischen Verarbeitung zugefügt wird.

Die Menge der einzusetzenden Säuren ist bei der Behandlung der p-Polyphenylensulfide z.B. über Wäsche und Extraktion nach oben unbegrenzt. Sie liegt jedoch im allgemeinen zwischen 1 und 300 Mol.-%, bevorzugt zwischen 5 und 200 Mol.-%, bezogen jeweils auf die Mole p-Polyphenylensulfid (Polymereinheit).

Die Säurenachbehandlung via Wäsche oder Extraktion kann mit oder ohne Mitverwendung eines Lösungsmittels für die jeweilige Säure erfolgen. Hierbei sind Lösungen mit Konzentrationen von 0,5 % bis 50 % möglich. Geeignete Lösungsmittel für die einzusetzenden Säuren sind z.B. Wasser

Methanol
Ethanol
Butanol
Iso-Butanol
Cyclohexanol
Aceton
Toluol und
N-Methylpyrrolidon.

Bei der Wäsche oder Extraktion mit den Säuren wird das basische Reaktionsgemisch entweder direkt durch Zugabe der Säuren neutral bzw. sauer gestellt, oder aber das p-Polyphenylensulfid zuerst nach den üblichen Verfahren z.B. durch Filtration oder Abdampfen des Reaktionslösungsmittels als pulverförmiger Feststoff gewonnen, der dann der Säurebehandlung unterworfen wird. Es empfiehlt sich nach der Säurebehandlung mit Wasser bis zum Neutralpunkt bzw. bis zum elektrolytfreien Zustand des Waschwassers nachzuwaschen. Ein Nachwaschen mit organischen, keine Säuregruppen enthaltenden Lösungsmitteln, wie z.B. den obengenannten, insbesondere Alkoholen, Ketonen und Aromaten wie z.B. Ethanol, Methanol, Aceton oder Toluol, kann den positiven Einfluß der erfindungsgemäßen Säurenachbehandlung noch verstärken.

In der gleichen Weise kann die Behandlung mit den Säuren über eine übliche fest-flüssige Extraktion erfolgen.

Die Zeit der Säurenachbehandlung beträgt im allgemeinen zwischen 0,1 und 8 Stunden, vorzugsweise 0,5 bis 4 Stunden, im Falle der Wäsche bzw. Extraktion.

Die Säurenachbehandlung via Wäsche oder Extraktion kann bei Temperaturen von 10° bis 250°C erfolgen, bei Drücken zwischen 1 und 50 Atmosphären. Im Vergleich zur Aufarbeitung des p-Polyphenylensulfidgemisches mit Wasser ohne Säurezusatz ist die Filtration des Reaktionsgemisches nach Säurezugabe gemäß der Erfindung erheblich erleichtert.

Die Nachbehandlung der Polyphenylensulfide durch Zugabe der Säuren vor oder während deren thermoplastischen Verarbeitung erfolgt mit Mengen zwischen 0,01 bis 5 Mol.-%, vorzugsweise 0,01 bis 2,5 Mol.-%, bezogen jeweils auf die Mole Polymereinheit in p-Polyphenylensulfid.

Die thermoplastische Verarbeitung der p-Polyphenylensulfide erfolgt bei den üblichen Temperaturen.

Die Säurenachbehandlung durch Zusatz vor oder während der thermoplastischen Verarbeitung des Polyphenylensulfids kann mit der Abmischung mit den anderen Thermoplasten also den aromatischen Polycarbonaten, aromatischen Polyestern und aliphatischen Polyestern, den aromatisch-aliphatischen Polyestern und/oder den aromatischen Polyester-Polycarbonaten, kombiniert werden, ebenso kann diese Form der Säurenachbehandlung mit dem Zusatz von für das p-Polyphenylensulfid bekannten Stabilisatoren, Entformungsmitteln, Füllstoffen etc. gekoppelt werden, der üblicherweise ebenfalls über die thermoplastische Verarbeitung erfolgen kann.

Die Nachbehandlung, insbesondere bei höheren Temperaturen, sollte vorzugsweise unter Ausschluß von Sauerstoff erfolgen; deshalb können nur nicht oxidierende organische und anorganische Säuren eingesetzt werden.

Beispiele für geeignete Säuren sind: Ameisensäure, Essigsäure, Chloressigsäure, Propionsäure, n-Buttersäure, Isobuttersäure (2-Methylpropan-säure), n-Valeriansäure, 2-Methylbutansäure, 3-Methyl-butansäure, Pivalinsäure, n-Capronsäure, Oxalsäure, Benzoesäure, Carboxymethylphosphonsäure, Methylphosphonsäure, Ethylphosphonsäure, Phenylphosphonsäure, Diethylphosphinsäure, Phenylphosphinigsäure, Methansulfinsäure, Hydroxymethansulfinsäure, Methansulfonsäure, Chlormethansulfonsäure, Ethansulfonsäure, Benzolsulfonsäure, 4-Chlorbenzolsulfonsäure, 4-Methylbenzolsulfonsäure, p-Sulfobenzoesäure, schweflige Säure, verdünnte Schwefelsäure, verdünnte Salpetersäure, Salzsäure, Hypophosphorige Säure, Phosphorige Säure, ortho-Phosphorsäure und meta-Phosphorsäure.

p-Phenylensulfide im Sinne der Erfindung sind verzweigte, hochmolekulare p-Polyphenylensulfide die man beispielsweise dadurch erhält, daß man

a) Dihalogenbenzole, von denen 50 bis 100 Mol-% der Formel (I)

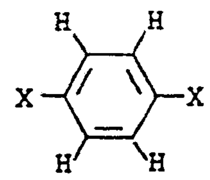

(I)

entsprechen und 0 bis 50 Mol.-% der Formel (II)

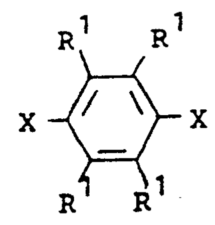

(II)

wobei

X Fluor, Chlor, Brom und Jod, vorzugsweise Chlor und Brom ist und

$R^1$ gleich oder verschieden ist und Wasserstoff $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0,1 bis 2,4 Mol.-%, bevorzugt 0,4 bis 2,0 Mol.-%, bezogen auf die Dihalogenbenzole, eines Polyhalogenaromaten der Formel (III) $ArX_n$ (III)

wobei

Ar ein aromatischer oder heterocyclischer Rest mit 6 bis 24 C-Atomen ist,

X die gleiche Bedeutung wie in Formel (I) und (II) hat, und

n 3 oder 4 ist,

mit einem Alkalisulfid, bevorzugt einem Natrium- und/oder Kaliumsulfid, in einem polaren Lösungsmittel nach den eingangs beschriebenen gängigen Verfahren umsetzt.

Hochmolekulare, aromatische, thermoplastische Polycarbonate im Sinne der Erfindung sind die bekannten Polycarbonate, die aus Diphenolen wie Resorcin, Hydrochinon, aus Dihydroxydiphenylen und insbesondere aus Bis-(hydroxyphenyl)-alkanen, wie beispielsweise Bis-(4-hydroxyphenyl)-propan-2.2 (Bisphenol A), Bis-(4-hydroxy-3,5-dimethyl-phenyl)-propan-2.2, aus Dreikernbisphenolen wie α,α'-Bis-(4-hydroxyphenyl)-p-diisopropylbenzol, aus halogenierten Bis(hydroxyphenyl)-alkanen wie beispielsweise 4,4'-Dihydroxy-3,5,3',5'-tetrachlordiphenyl-propan-2.2 oder 4,4'-Dihydroxy-3,5,3',5'-tetrabromdiphenyl-propan-2.2, Bis-(hydroxyphenyl)-cycloalkanen, -sulfonen, -sulfoxyden, -ethern oder -sulfiden, gegebenenfalls im Gemisch mit Glykolen, mit Derivaten der Kohlensäure, beispielsweise ihren Diestern oder Dihalogeniden, gegebenenfalls unter Mitverwendung untergeordneter Mengen von Dicarbonsäuren oder deren für eine Esterbildung geeigneten Derivaten, hergestellt sind und die ein mittleres Molekulargewicht (Mw) von mindestens etwa 10 000, vorzugsweise von etwa 20 000 und bis etwa 200 000 und insbesondere von 25 000 bis 80 000 besitzen, ermittelt durch Messungen der rel. Viskosität in $CH_2Cl_2$ bei 25°C und einer Konzentration von 0,5 Gew.-%.

Einschlägige Literaturstellen für die geeigneten Diphenole und die Polycarbonate sind beispielsweise US-Patent 30 28 365, die DE-OS 20 63 050 sowie die Monographie "H. Schnell, Chemistry and Physics of Polycarbonates, Interscience Publishers, New York, 1964".

Bevorzugte Diphenole für die erfindungsgemäß einsetzbaren Polycarbonate sind:4,4'-Dihydroxydiphenyl, 2,2-Bis-(4-hydroxyphenyl)-propan, 2,4-Bis:(4-hydroxyphenyl)-2-methylbutan, 1,1-Bis-(4-hydroxyphenyl)-cyclohexan, α, α' -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxy-phenyl)-propan, 2,2-Bis-(3,5-dichlor-4-hydroxyphenyl)-propan, 2,2-Bis-(3,5-dibrom-4-hydroxyphenyl)-propan.

Besonders bevorzugte Diphenole sind z.B: 2,2-Bis-(4-hydroxyphenyl)-propan, 2,2-Bis-(3,5-dimethyl-4-hydroxyphenyl)-propan, 2,2-Bis-(3,5-dichlor-4-hydroxy-phenyl)-propan, 2,2-Bis-(3,5-dibrom-4-hydroxyphenyl)-propan, 1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in dem deutschen Patent 25 00 092 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-/4,4-bis-(4-hydroxyphenyl)-cyclohexyl/-propan, 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4'-dihydroxytriphenyl-methyl)-benzol. Einige der sonstigen dreifunktionellen Verbindungen sind 2,4-Di-hydroxybenzoesäure, Trimesinsäure, Cyanurchlorid und 3,3-Bis-(4-hydroxyphenyl)-2-oxo-2,3-dihydroindol.

Thermoplastische Polycarbonate im Sinne der Erfindung können auch aus Mischungen von verschiedenen Polycarbonaten aufgebaut sein, beispielsweise aus solchen von sehr hochmolekularen mit normalen hochmolekularen Polycarbonaten gemäß DE-OS 27 29 763 oder von normalen hochmolekularen Polycarbonaten mit geringen Mengen an niedermolekularen Polycarbonaten mit $\bar{M}w < 10\,000$ insbesondere mit Polymerisationsgraden von 3 bis 15.

Thermoplastische Polyester im Sinne der Erfindung sind aromatische Polyester und aliphatische Polyester und aromatisch-aliphatische Polyester.

Aliphatische Polyester im Sinne der Erfindung sind aus der aus hochmolekularen polymeren Glycoterephthalaten oder -isophthaten bestehenden Familie mit wiederkehrenden Einheiten der allgemeinen Formel:

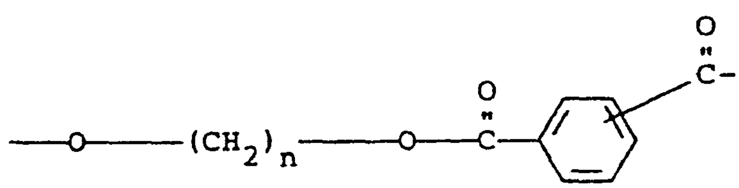

(IV)

ausgewählt, worin

n eine ganze Zahl von 2 bis 6 ist,

und Mischungen derartiger Ester, einschließlich von Mischpolyestern von Terephthal- und Isophthalsäuren.

Polyalkyllenglykolterephthalate im Sinne der vorliegenden Erfindung sind z.B. solche auf Basis von Ethylenglykol, Propandiol-1,3, Butandiol-1,4 und Hexandiol-1,6. Die Molekulargewichte ($\bar{M}w$ dieser Polyalkylenglykolterephthalate liegen zwischen 10 000 und 80 000. Die Polyalkylenglykolterephthalate können nach bekannten Verfahren beispielswise aus Terephthalsäuredialkylester und dem entesprechenden Diol durch Umesterung erhalten werden (siehe z.B. US-Patente 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210-220°C erhöht. Der in Freiheit gesetzte Alkohol wird abdestilliert. Die Aufkondensation erfolgt anschließend bei Temperaturen von 210-280°C, der Druck wird dabei stufenweise bis auf weniger als 1 Torr erniedrigt, wobei das überschüssige Diol abdestilliert wird.

Die Herstellung der Polyalkylenglykolisophthalate sowie der Mischpolyester von Terephthal- und Isophthalsäuren kann ebenfalls nach dem oben beschriebenen Kondensationsverfahren erfolgen.

Die Molekulargewichte Mw der Isophthalate liegt zwischen 10 000 und 80000, die Molekulargewichte Mw der Mischpolyester aus Terephthal- und Isophthalsäuren liegen zwischen 10000 und 100000.

Besonders bevorzugte aliphatische thermoplastische Polyester sind Polyethylenterephthalate mit Mw zwischen 10000 und 80000 sowie Polybutylenterephthalate mit Mw zwischen 10000 und 80000.

Aromatische Polyester im Sinne der Erfindung sind solche auf Basis von Terephthalsäure und/oder Isophthalsäure und Bisphenolen mit Molekulargewichten (Mw. Gewichtsmittel) von 10 000 bis 100 000, insbesondere von 10 000 bis 50 000, gemessen über Gelchromatographie nach bekannten Methoden.

Zur Herstellung der erfindungsgemäß verwendeten aromatischen Polyester werden vorzugsweise Gemische aus Terephthalsäuredichlorid und Isophthalsäuredichlorid im Molverhältnis 7:3 bis 3:7 eingesetzt. Insbesondere werden Gemische aus Terephthalsäuredichlorid und Isophthalsäuredichlorid im Molverhältnis 1:1 eingesetzt.

Geeignete Diphenole für die Herstellung der aromatischen Polyester sind solche der Formel (V)

HO-Z-OH (V)

worin

Z ein zweiwertiger ein- oder mehrkerniger aromatischer Rest mit 6 bis 30 C-Atomen ist,

bevorzugte Diphenole sind die der Formel (VI)

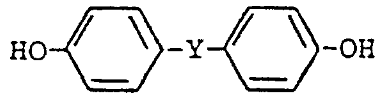

(VI)

worin

Y eine Einfachbindung, einen Alkylen- oder Alkylidenrest mit 1 bis 5 C-Atomen, einen Cyclohexylen- oder Cyclohexylidenrest, -O-, -S-, -SO-, $-SO_2-$ oder -CObedeutet. Für die Herstellung der aromatischen Polyester geeignete Diphenole sind beispielsweise die bereits für die Herstellung der aromatischen Polycarbonate geeigneten Diphenole.

Bevorzugte Diphenole für die Herstellung der aromatischen Polyester sind

Bisphenol A = 2,2-Bis-(4,4-dihydroxy-diphenyl)-propan, Tetramethylbisphenol A, 1,1-Bis-(4-hydroxyphenyl)-iso-butan, 1,1-Bis-(4-hydroxyphenyl)-cyclohexan, 4,4-Di-hydroxydiphenylsulfid, 4,4-Dihydroxydiphenyl, 4,4-Dihydroxydiphenylsulfon sowie deren di- und tetrahalogenierten Derivate. Besonders bevorzugt ist Bisphenol A. Es können auch beliebige Mischungen der vorgenannten Diphenole verwendet werden.

Die aromatischen Polyester können nach dem Phasengrenzflächenverfahren hergestellt werden gemäß Lit.-Stelle W.M. Eareckson, J. Polymer Sci., XL, 399 (1959).

Hierbei können als Kettenregler beliebige Phenole dienen, insbesondere jedoch die Verbindungen der Formel (VII)

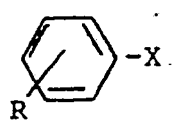

(VII)

worin

X OH, O-CO-Cl oder COCl und

R ein verzweigter Alkylrest mit 8 bis 9 C-Atomen ist,

mit der Maßgabe, daß im Alkylrest R der Anteil von Methyl-Wasserstoffatomen, bezogen auf sämtliche Wasserstoffatome des Alkylrests R, 47 bis 89 % beträgt, daß R in o- und/oder p-Position steht und die Obergrenze des o-Isomerenanteils 20 % beträgt. Diese als Kettenbegrenzer einzusetzenden Verbindungen sind entweder bekannt oder auf einfache Weise herzustellen (siehe DE-OS 29 40 024 bzw. DE-OS 28 42 005).

Die erfindungsgemäß für die Abmischungen mit Polyphenylensulfid geeigneten aromatischen Polyester lassen sich auch durch Schmelzkondensation (siehe A. Conix, Ind. Eng.-Chem., 51, 147 (1959) oder US-Patent 33 95 119) herstellen.

Die erfindungsgemäß ebenfalls als Mischungspartner mitzuverwendenden thermoplastischen aliphatischaromatischen Polyester sind beispielsweise bekannt aus US 34 71 441.

Die erfindungsgemäß ebenfalls als Mischungspartner mitzuverwendenden thermoplastischen, aromatischen Polyester-Polycarbonate sind beispielsweise bekannt aus DE-OS 20 09 494 bzw. DE-OS 20 52 378 bzw. dem entsprechenden US-Patent 37 29 447.

Die erfindungsgemäßen Legierungen werden nach bekannten Verfahren durch Mischen in der Schmelze erhalten, so z.B. über das Compoundieren in handelsüblichen Schneckenmaschinen oder Knetern bei Temperaturen zwischen 270°C und 420°C.

Die erfindungsgemäßen Legierungen können direkt durch Extrusion, Extrusionsblasen, Spritzgießen oder sonst übliche Verarbeitungstechniken in bekannter Weise zu Folien, Formkörpern oder Fasern verarbeitet werden, welche in üblicher Weise Verwendung finden als Automobilteile, Armaturen, Elektroteile, Teile in der elektronischen Industrie, Chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile etc.

Die erfindungsgemäßen Legierungen können: auch mit Pigmenten und Füllstoffen, wie beispielsweise Graphit, Metallpulver, Glaspulver, Quarzmehl oder Glasfasern, organischen Verstärkungsfasern z.B. Kevlar oder Kohlefasern gemischt oder mit den für Polyphenylensulfide bzw. thermoplastische Polycarbonate bzw. thermoplastische Polyester üblichen Additiven, wie beispielsweise bekannten Stabilisatoren oder Entformungsmitteln, versetzt werden.

Die relativen Lösungsviskositäten der in den Beispielen verwendeten Polycarbonate und aromatischen Polyester wurden jeweils bei 25°C und einer Konzentration von 0,5 g Substanz in 100 ml Methylenchlorid

gemessen.

Die verwendeten handelsüblichen p-Polyphenylensulfide (Ryton P4®, Ryton P6 ® und Ryton VI® der Phillips Petroleum Comp.) unterscheiden sich in ihrem Fließverhalten. Als Maß der Fließfähigkeit wird die Schmelzviskosität $\eta_m$ bei 306°C bei einer bestimmten Schubspannung von $\tau = 10^2$ Pa mit dem Instron-Rotationsviskosimeter gemessen.

Ryton VI® $\eta_m$ = 5,8 Pa.s (=PPS 1)
Ryton P6® $\eta_m$ = 280 Pa.s (=PPS 2)
Ryton P4® $\eta_m$ = 4500 Pa.s (=PPS 3)

**Beispiel 1**

Ein im Handel befindliches p-Polyphenylensulfid mit $\eta_m$ 4500 Pa.s (bei 306 °C und bei $\tau = 10^2$ Pa) (Ryton P4 ® der Phillips Petroleum Company) wurde unter üblichen Bedingungen zu Normkleinstäben verspritzt. Die Farbe dieser Prüfstäbe ist braun-schwarz. Die Prüfstäbe sind nicht transparent.

**Beispiel 2**

In einem mit Rührer und Destillationsaufsatz ausgerüsteten Autoklaven werden 127,7 g Natriumsulfid-Hydrat (0,97 Mol) in 300 g N-Methyl-2-pyrrolidon und 13,06 g Dimethylacetamid langsam bis auf 180°C aufgeheizt, wobei 8,5 ml Destillat aufgefangen werden, das hauptsächlich aus Wasser besteht.

Nach Zugabe einer entsprechenden Menge NaOH zur Neutralisation des im Natriumsulfid befindlichen Natriumhydrogensulfids sowie 147,0 g (1,0 Mol) p-Dichlorbenzol und 1,4 g 1,2,4-Trichlorbenzol (0,008 Mol) und 150 g N-Methyl-2-pyrrolidon wird der Ansatz von 200°C in ca. 90 Min. auf 270°C aufgeheizt und anschließend noch 2,5 Stunden bei 270°C gehalten. Nach Entspannen wurde das Reaktionsgemisch in Wasser aufgenommen und langsam soviel Salzsäure zugefügt, bis der pH 2 erreicht war.

Danach wurde 10 Minuten intensiv gerührt und abfiltriert. Aufgrund der sauren Wäsche läßt sich p-Polyphenylensulfid erheblich besser abfiltrieren. Das sauer behandelte p-Polyphenylensulfid wird mit Wasser neutral gewaschen, erneut filtriert und kurz mit Ethanol behandelt. Nach Filtration und Trocknung erhält man ein weißes Polymerisat.

Wird dieses erfindungsgemäß behandelte p-Polyphenylensulfid analog Beispiel 1 verspritzt, erhält man bei niedrigen Werkzeugtemperaturen transparente und bei höheren Werkzeugtemperaturen aufgrund der erhöhten Kristallisation bei langsamerem Abkühlen grau-weiße Prüfstäbe.

**Beispiel 3**

In einem Modellversuch wurde die Abbaureaktivität eines erfindungsgemäß modifizierten p-Polyphenylensulfids und eines handelsüblichen p-Polyphenylensulfids gegenüber den Legierungspärtnern Polycarbonat und aromatischer Polyester geprüft:

Je 50 g p-Polyphenylensulfid wurden mit 50 g des jeweiligen Legierungspartners 30' bei 320°C intensiv geknetet. Nach dem Abkühlen wurde das entstandene Polymergemisch zerkleinert, gemahlen und anschließend mehrmals unter Rückfluß mit Methylenchlorid extrahiert. Die Methylenchloridphasen eines Versuchs wurden vereinigt und eingeengt bis zur Trockne. Der auf diese Weise vom p-Polyphenylensulfid, das unlöslich in Methylenchlorid ist, abgetrennte Legierungspartner wurde durch Messung der Lösungsviskosität $\eta$ rel (0,5 g Polymer in 100 ml Methylenchlorid) hinsichtlich des Abbaues untersucht. Als Legierungspartner wurde ein Polycarbonat auf Basis Bisphenol A mit $\eta_{rel}$ = 1,295 und ein aromatischer Polyester auf Basis Bisphenol A und eines Gemisches von Terephthalsäure und Isophthalsäure (Molverhältnis 50:50) eingesetzt.

Die Ausgangslösungsviskositäten betrugen:
Polycarbonat $\eta$ rel = 1,295
aromatischer Polyester $\eta$ rel = 1,315

In Tabelle 1 sind die nach der Knetung (30' bei 320°C) gemessenen Lösungsviskositäten als Maß des Abbaues aufgelistet:

Tabelle 1

| PPS 50 Gew.-% | Legierungspartner 50 Gew.-% | Bedingungen | η rel von Leg. Partner vorher | nachher |
|---|---|---|---|---|
| PPS 3** | Polycarbonat | 320°C/30′ | 1,295 | 1,182 |
| PPS 2* | Polycarbonat | 320°C/30′ | 1,295 | 1,083 |
| PPS 3** | Aromatischer Polyester | 320°C/30′ | 1,315 | 1,183 |
| PPS 2* | Aromatischer Polyester | 320°C/30′ | 1,315 | 1,162 |
| PPS gemäß Beispiel 2 | Polycarbonat | 320°C/30′ | 1,295 | 1,212 |
| PPS gemäß Beispiel 2 | Aromatischer Polyester | 320°C/30′ | 1,315 | 1,224 |

* PPS 2 ist ein handelsübliches Polyphenylensulfid mit $\eta_m$ = 280 Pa.s (bei 306°C und $\tau = 10^2$ Pa) (= Ryton P6® der Phillips Petroleum Company)

** PPS 3 ist ein handelsübliches Polyphenylensulfid mit $\eta_m$ = 4 500 Pa.s (bei 306°C und $\tau = 10^2$ Pa) (= Ryton P4® der Phillips Petroleum Company)

Es wird deutlich sichtbar, daß die sauer gewaschenen p-Polyphenylensulfide einen geringen Abbau bei den Legierungspartnern bewirken.

**Beispiel 4**

In der gleichen Apparatur und unter den gleichen Bedingungen wie in Beispiel 3 werden 50 Gew.-% des handelsüblichen p-Polyphenylensulfids PPS 3 **) mit 50 Gew.-% des Polycarbonats oder 50 Gew.-% des aromatischen Polyesters verarbeitet. Als Maß für den Abbau des Legierungspartners wurde wieder dessen Lösungsviskosität vor und nach der Verarbeitung gemessen (siehe Tabelle 2). Dazu wurde gemäß Beispiel 3 der Legierungspartner nach der Verarbeitung mit Methylenchlorid extrahiert.

Tabelle 2

| PPS 50 Gew.-% | Legierungspartner 50 Gew.-% | Additiv | η rel von Leg. Partner vorher | nachher |
|---|---|---|---|---|
| PPS 3** | Bisphenol-A-Polycarbonat rel 1.295 | — | 1,295 | 1,182 |
| PPS 3** | Bisphenol-A-Polycarbonat rel 1.295 | 0,125 Gew.-% Metaphosphorsäure | 1,295 | 1,211 |
| PPS 3** | Poycarbonat, wie vorstehend | 0,25 Gew.-% Metaphosphorsäure | 1,295 | 1,234 |
| PPS 3** | Polycarbonat, wie vorstehend | 0,50 Gew.-% Metaphosphorsäure | 1,295 | 1,257 |
| PPS 3** | aromatischer Plyester gemäß Beispiel 3 | — | 1,315 | 1,183 |
| PPS 3** | aromatischer Polyester gemäß Beispiel 3 | 0,25 Gew.-% Metaphosphorsäure | 1,315 | 1,222 |
| PPS 3** | aromatischer Polyester gemäß Beispiel 3 | 0,25 Gew.-% Benzolsulfonsäure | 1,315 | 1,213 |

** PPS 3 ist ein handelsübliches Polyphenylensulfid mit $\tau = 10^2$ Pa) (= Ryton P4® der Phillips Petroleum Company

**Beispiel 5**

Wie Beispiel 4, jedoch wurde als Legierungspartner eines handelsüblichen p-Polyphenylensulfids (Ryton V1 ®der Phillips Petroleum Company) ein Polycarbonat auf Basis des 2,2-Bis-(4-hydroxy-3,5-dimethylphenyl)-propans (Methylpolycarbonat) $\eta_{rel}$ 1.320 (gemessen in $CH_2Cl_2$, 0,5 g in 100 ml bei 25°C) eingesetzt.

**Tabelle 3**

| PPS 50 Gew.-% | Legierungspartner 50 Gew.-% | Additiv | η rel von Leg. vorher | Partner nachher |
|---|---|---|---|---|
| PPS 1* | Methylpolycarbonat | — | 1,320 | 1,094 |
| PPS 1* | Methylpolycarbonat | 0,1 Gew.-% Metaphosphorsäure | 1,320 | 1,112 |
| PPS 1* | Methylpolycarbonat | 0,25 Gew.-% Metaphosphorsäure | 1,320 | 1,165 |
| PPS 1* | Methylpolycarbonat | 0,50 Gew.-% Metaphosphorsäure | 1,320 | 1,256 |

* PPS 1 ist ein handelsübliches Polyphenylensulfid mit $\eta_m$ = 5,8 Pa.s (gemessen bei 306°C und = $10^2$ Pa) (Ryton V1® der Phillips Petroleum Comp.)

**Beispiel 6**

500 g p-Polyphenylensulfid PPS 3 *) wurde in 875 g Eisessig gegeben und das Gemisch 30 Minuten zum Rückfluß gebracht. Nach Abkühlen wurde abfiltriert mit Wasser gewaschen und bei 100°C im Vakuum getrocknet.

Das sauer gewaschene, getrocknete p-Polyphenylensulfid wurde wieder mit den Polycarbonaten der Beispiele 3 bzw. 5 und dem aromatischen Polyester gemäß Beispiel 3 compoundiert (siehe Tabelle 4).

**Tabelle 4**

| PPS 50 Gew.-% | Legierungspartner 50 Gew.-% | η rel Leg. vorher | Partner nachher |
|---|---|---|---|
| PPS 3* | Bisphenol-A-Polycarbonat, rel 1.295 | 1,295 | 1,182 |
| PPS 3* Essigsäure gewaschen | Polycarbonat, wie vorstehend | 1,295 | 1,228 |
| PPS 3* | aromatischer Polyester gemäß Beispiel 3 | 1,315 | 1,183 |
| PPS 3* Essigsäure gewaschen | aromatischer Polyester gemäß Beispiel 3 | 1,315 | 1,232 |
| PPS 3* | Methylpolycarbonat gemäß Beispiel 5 | 1,320 | 1,211 |
| PPS 3* Essigsäure gewaschen | Methylpolycarbonat gemäß Beispiel 5 | 1,320 | 1,260 |

* PPS 3 ist ein handelsübliches Polyphenylensulfid mit $\eta_m$ = 4500 Pa.s (gemessen bei 306°C und $\tau = 10^2$ Pa) (Ryton P4® der Phillips Petroleum Company)

**Beispeil 7**

Durch eine Kombination der sauren Wäsche und nachträgliche Zugabe von acidifizieren Agentien wie z.B. Metaphosphorsäure kann der stabilisierende Effekt weiter verstärkt werden, so daß der Abbau von Legierungspartnern fast völlig vermieden werden kann (siehe Tabelle 5).

Tabelle 5

| PPS 50 Gew.-% | Legierungspartner 50 Gew.-% | Additiv | rel Leg. vorher | Partner nachher |
|---|---|---|---|---|
| PPS 3* | Bisphenol-A-polycarbonat, rel 1.295 | — | 1,295 | 1,182 |
| PPS 3* Essigsäure gewaschen | Polycarbonat, wie vorstehend | 0,15 Gew.-% Metaphosphorsäure | 1,295 | 1,265 |
| PPS 3* | aromatischer Polyester gemäß Beispiel 3 | — | 1,315 | 1,183 |
| PPS 3* Essigsäure gewaschen | aromatischer Polyester gemäß Beispiel 3 | — | 1,315 | 1,232 |
| PPS 3* Essigsäure gewaschen | aromatischer Polyester gemäß Beispiel 3 | 0,15 Gew.-% Metaphosphorsäure | 1,315 | 1,273 |

* PPS 3 ist ein handeslübliches Polyphenylensulfid mit $\eta_m$ = 4500 Pa.s (gemessen bei 306°C und = $10^2$ Pa) (Ryton P4® der Phillips Petroleum Company)

**Beispiel 8**

Über eine Zweiwellenschnecke wurden ein handelsübliches p-Polyphenylensulfid PPS 3 *) und ein aromatischer Polyester auf Basis Terephthalsäure/Isophthalsäure und Bisphenol A mit einer η rel von 1,298 compoundiert. Die resultierende Legierung wurde zu Prüfstäben verspritzt. Der gleiche Versuch wurde wiederholt jedoch mit einem analog Beispiel 6 mit Essigsäure gewaschenen PPS 3 *). Die mechanischen Werte der Legierungen sind in Tabelle 6 festgehalten.

Tabelle 6

| | 5 % aromatischer Polyester | | 15 % aromatischer Polyester | |
|---|---|---|---|---|
| | +95 % PPS 3* | +95 % PPS 3* essigsauer gewaschen | +85 % PPS 3* | +85 % PPS 3* essigsauer gewaschen |
| Zugfestigkeit (MPa) | 37,26 | 46,18 | 42,73 | 49,57 |
| Reißdehnung (%) | 0,89 | 1,29 | 1,02 | 1,24 |
| Biegefestigkeit (MPa) | 63,11 | 99,27 | 81,42 | 94,38 |
| Biege-E-Modul (MPa) | 2963 | 2804 | 2193 | 2746 |
| Schlagzähigkeit (kJ/m²) | 1,88 | 9,16 | 3,64 | 10,7 |

Bei fast allen Werten, insbesondere bei der für PPS wichtigen Schlagzähigkeit sind die Legierungen auf Basis des sauer gewaschenen PPS 3* überlegen.

* PPS 3 ist ein handelsüjbliches Polyphenylensulfid mit $\eta_m$ =) 4500 Pa.s (gemessen bei 306°C und $\tau = 10^2$ Pa) (Ryton P4® der Phillips Petroleum Company)

**Patentansprüche**

Verwendung von p-Polyphenylensulfiden und gegebenenfalls gehärteten Polyphenylensulfiden, die nach bekannten Verfahren hergestellt wurden und die einer Nachbehandlung mit nicht-oxidierenden organischen oder nicht-oxidierenden anorganischer Säuren unterzogen worden sind, zur Herstellung von Mischungen mit thermoplastischen Polyestern und/oder thermoplastischen aromatischen Polyester-Polycarbonaten.

2. Verfahren zur Herstellung von Mischungen aus p-Polyphenylensulfiden und thermoplastischen aromatischen Polycarbonaten, thermoplastischen Polyestern und/oder thermoplastischen aromatischen Polyester-Polycarbonaten, dadurch gekennzeichnet, daß 0,01 bis 5 Mol-%, bezogen jeweils auf die Mole Polymereinheit im Polyphenylensulfid, einer nicht-oxidierende anorganische und/oder nicht-oxydierende organische Säure vor oder während der thermoplastischen Verarbeitung zu der Mischung gegeben wird.

3. Mischungen aus den p-Polyphenylensulfiden nach Anspruch 1 mit thermoplastischen aromatischen Polycarbonaten, thermoplastischen Polyestern und/oder aromatischen thermoplastischen Polyester-Polycarbonaten, wobei die jeweiligen Mengenverhältnisse von p-Polyphenylensulfid zu der Summe der anderen Thermoplasten jeweils zwischen 98:2 und 70:30 liegen.

**Claims**

1. Use of p-polyphenylene sulphides and optionally hardened polyphenylene sulphides, which have been produced by known processes and which have been subjected to an after-treatment with nonoxidising organic or non-oxidising inorganic acids, for the production of mixtures with thermoplastic polyesters and/or thermoplastic aromatic polyester polycarbonates.

2. Process for the production of mixtures of p-polyphenylene sulphides and thermoplastic aromatic polycarbonates, thermoplastic polyesters and/or thermoplastic aromatic polyester polycarbonates, characterised in that 0.01 to 5 mol %, based in each case on the mols of polymer unit in the polyphenylene sulphide, of a nonoxidising inorganic and/or non-oxidising organic acid is added to the mixture before or during the thermoplastic processing.

3. Mixtures of the p-polyphenylene sulphides according to Claim 1 with thermoplastic aromatic polycarbonates, thermoplastic polyesters and/or aromatic thermoplastic polyester polycarbonates, the respective quantitative ratios of p-polyphenylene sulphide to the sum of the other thermoplastics being in each case between 98:2 and 70:30.

**Revendications**

1. Utilisation de sulfures de p-polyphénylène et de sulfures de polyphénylène éventuellement durcis, qui ont éte préparés par des procédés connus et qui ont été soumis à un traitement subséquent par des acides organiques non oxydants ou minéraux non oxydants, pour la préparation de mélanges avec des polyesters thermoplastiques et/ou des polyester-carbonates aromatiques thermoplastiques.

2. Procédé de préparation de mélanges de sulfures de p-polyphénylène et de polycarbonates aromatiques thermoplastiques, de polyesters thermoplastiques et/ou de polyester-polycarbonates aromatiques thermoplastiques, caractérisé en ce que l'on ajoute au mélange, avant ou durant le travail thermoplastique, de 0,07 à 5 moles %, par rapport aux moles de motif polymère contenues dans le sulfure de polyphénylène, d'un acide minéral non oxydant et/ou d'un acide organique non oxydant.

3. Mélanges des sulfures de p-polyphénylène selon la revendication 7 avec des polycarbonates aromatiques thermoplastiques, des polyesters thermoplastiques et/ou des polyester-polycarbonates thermoplastiques aromatiques, dans des proportions relatives de 98:2 à 70:30 entre le sulfure de p-polyphénylène et la somme des autres matières thermoplastiques.